# EUROPEAN PATENT APPLICATION

(11) **EP 3 905 068 A1**
(43) Date of publication of application: **03.11.2021**
(21) Application number: 20172346.7
(22) Date of filing: 30.04.2020
(51) Int. Cl.: G06F 16/901

(54) **A METHOD AND SYSTEM OF ARCHIVING A BLOCKCHAIN**

(71) Applicant: Siemens Aktiengesellschaft, 80333 München (DE)
(72) Inventor: RAJ, Arun, 635110 Hosur, Tamil Nadu (IN); THIYAGARAJAN, Rajaram, 560102 Bangalore, Karnataka (IN)
(74) Representative: Patentanwaltskanzlei WILHELM & BECK

(57) **Abstract**

The present invention relates to a method of archiving a blockchain. The method includes identifying a one or more blocks (402) of a blockchain network (403) based on at least one of a predefined criteria. Further, the method includes obataining a hash information (401B) and a state information (401A), associated with the one or more blocks (402) in the blockchain network (403). Furthermore, the method includes creating an archival block (401) comprising the state information (401A), and the hash information (401B), associated with the one or more blocks (402). Finally, the method includes moving the identified one or more blocks (402) to a pre-allocated storage area(102A-G).

## Description

The present invention relates to the field of blockchain and more particularly relates to a method and system of archiving a blockchain.

In blockchain, one or more transactions are validated and stored by a plurality of nodes participating in the blockchain. The plurality of nodes is a computer associated with a user. Gradually, as the length of the blockchain increases with the addition of new blocks, the size of the memory required to store the blockchain reaches hundreds of GigaBytes (GBs). The requirement of huge memory restricts one or more nodes of the plurality of nodes from participating in the blockchain. Therefore, validation of one or more transactions is performed only by one or more nodes participating in the blockchain leading to centralization and takeover attacks. The huge memory requirement centralizes the blockchain network and the one or more nodes not participating in the blockchain need to trust a node among the one or more nodes participating in the blockchain regarding details of the one or more transactions. Further, to provide a response to a query from a user, one or more blocks of the blockchain is traversed to search for required data. The response to the query obtained by traversing the one or more blocks in the blockchain leads to higher latency requirement and additionally the one or more nodes require higher computational resources.

In view of the above, there exists a need for archiving the blockchain to reduce the memory requirement and provide the response to queries from the user with minimum latency and fewer computational resources.

Therefore, it is the object of the present invention to enable the plurality of nodes to archive the blockchain and participate in the blockchain without the need for huge memory and computational resources.

The object of the present invention is achieved by a method of archiving a blockchain. The method comprises identifying one or more blocks in a blockchain network based on a predefined criteria . Further, the method comprises obtaining a hash information and a state information, associated with the one or more blocks in the blockchain network. Furthermore, the method comprises creating an archival block in the blockchain network comprising the state information, and the hash information, associated with the one or more blocks. Finally, the method comprises moving the identified one or more blocks to a pre-allocated storage area. Creation of the archival block stores necessary information to provide a response to a user query. Further, moving the one or more blocks reduces the memory requirment of a node participating in the blockchain network.

In a preferred embodiment, the method may comprise the state information including one or more account details associated with a finanicial institution and an amount indicative of a currency associated with each of the one or more account details from the one or more blocks of the blockchain network. Further, the state information is stored as a mapping table in the archival block. The state information represents a global information of the one or more blocks.

In a preferred embodiment, the method may comprise the hash information including an aggregated cryptographic hash associated with the one or more blocks of the blockchain network. The hash information is used to validate the one or more blocks associated with the blockchain network.

In a preferred embodiment, the method may comprise the data associated with one or more queries including one or more queries frequently inquired by users and a response to each of the one or more queries. Further, the response is determined based on one or more transactions stored in the one or more blocks. The data associated with one or more queries stores the frequently asked queries and the response to the queries determined using the one or more blocks associated with the blockchain network.

In a preferred embodiment, the method may comprise determining the response by retrieving one or more values from the one or more transactions stored in the one or more blocks for each of the one or more queries. Further, combining the one or more values using one or more statistical techniques for determining the response. For example, the response to one or more queries may be a mean or average of a 100 transactions associated with the one or more account details.

In a preferred embodiment, the method may comprise generating the archival block after being triggered based on at least one of a predetermined time period and a predefined count of the one or more blocks. For example, the predetermined time period may be 1 day, 10 days and the like, and the a predefined count may be 50 blocks, 75 blocks, and the like.

In a preferred embodiment, the method may comprise archiving the one or more blocks by storing the one or more blocks in a pre-allocated storage area. The archiving reduces the need of huge memory requirments at the node participating in the blockchain network.

In a preferred embodiment, the method may comprise adding the archival block to the archival blockchain by computing a cryptographic hash based on at least one of state information, hash information, and data associated with one or more queries of a previous block created previously to the archival block. Further, concatenating the cryptographic hash with the state information, the hash information, and the data associated with one or more queries of the archival block. Furthermore, adding the archival block to a archival blockchain. The generation of the archival blockchain makes the information stored in the archival block immutable.

The object of the present invention is also achieved by a computing system for archiving a blockchain. The computing system comprises a processor and a memory communicatively coupled to the processor. The memory stores the processor instructions, which, on execution, causes the processor to create a archival block comprising at least one of state information, hash information, and data associated with one or more queries, of one or more blocks of a blockchain network. Further, archive the one or more blocks associated with the blockchain network.

In a preferred embodiment, the data associated with one or more queries includes one or more queries frequently inquired by users and a response to each of the one or more queries. The response is determined based on one or more transactions stored in the one or more blocks of the blockchain network.

In a preferred embodiment, the processor is configured to determine the response by retrieving one or more values from the one or more transactions stored in the one or more blocks for each of the one or more queries. Further, the processor is configured to combine the one or more values using one or more statistical techniques for determining the response.

In a preferred embodiment, the processor is configured to create the archival block upon encountering at least one of a predetermined time period and a predefined count of the one or more blocks.

In a preferred embodiment, the processor is configured to archive the one or more blocks by storing the one or more blocks in a pre-allocated storage area.

In a preferred embodiment, the processor is further configured to compute a cryptographic hash based on at least one of state information, hash information, and data associated with one or more queries of a previous block, where the previous block is created previously to the archival block. Furthermore, the processor is configured to concatenate the cryptographic hash with the state information, the hash information, and the data associated with one or more queries of the archival block. Thereafter the processor is configured to add the archival block to a archival blockchain.

The object of the present invention is also achieved by a method of providing a response to a query. The method comprises receiving a first query from a user. Further, the method comprises identifying at least one of a presence or absence of a first response to the first query in the archival block. In response to identifying the presence of the first response, the method comprises providing the first response to the user. Alternatively, in response to identifying the absence of the first response, the method comprises retrieving the one or more blocks from a pre-allocated storage area. Further, verifying a cryptographic hash associated with the one or more blocks. Furthermore, determining the first response based on one or more transactions stored in the one or more blocks. Finally, providing the first response to the user.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- **FIG 1**: shows an exemplary environment for archiving a blockchain, according to an embodiment of the present invention.
- **FIG 2**: shows a block diagram of a computing system, according to an embodiment of the present invention.
- **FIG 3**: illustrates a process flowchart of an exemplary method of archiving a blockchain, according to an embodiment of the present invention.
- **FIG 4A**: shows an exemplary archival block created from one or more blocks, according to an embodiment of the present invention.
- **FIG 4B**: shows an exemplary archiving of one or more blocks, according to an embodiment of the present invention.
- **FIG 4C**: shows an exemplary addition of an archival block to a archivalblockchain, according to an embodiment of the present invention.
- **FIG 5**: illustrates a process flowchart of an exemplary method for providing a response to a query, according to an embodiment of the present invention.
- **FIG 6**: shows an exemplary response provided to a first query received from a user, according to an embodiment of the present invention. And
- **FIG 7**: illustrates a block diagram of an exemplary computer system for implementing embodiments consistent with the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide a thorough understanding of one or more embodiments. It may be evident that such embodiments may be practiced without these specific details.

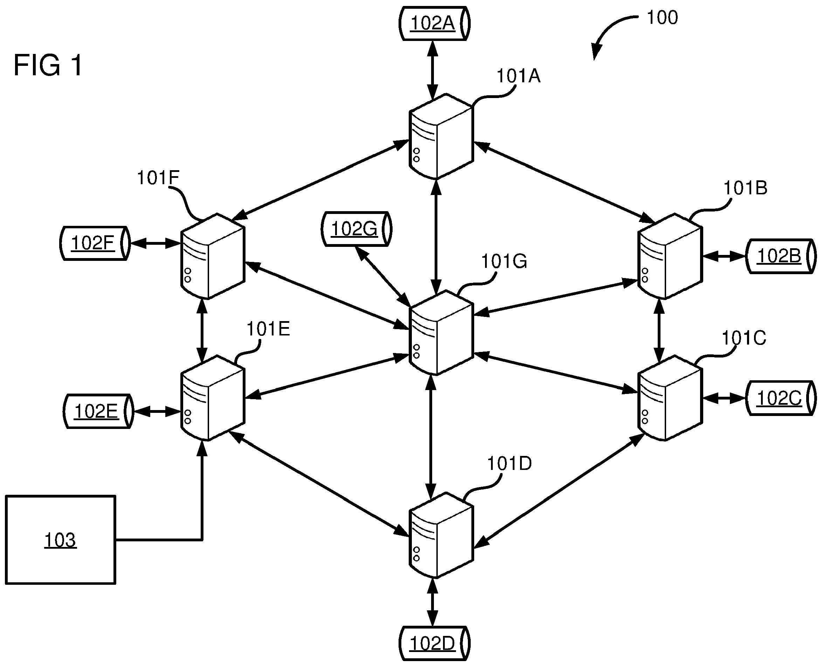

**FIG 1** shows an exemplary environment for archiving a blockchain, according to an embodiment of the invention. The environment 100 includes a blockchain network. The blockchain network may include a plurality of nodes 101A-G configured as a distributed network. The distributed network may include a peer-to-peer connection among the plurality of nodes 101A-G as shown in **FIG 1****.** The person skilled in the art appreciates the use of different arrangements of the plurality of nodes 101A-G in the distributed network, the peer-to-peer configuration is only an example and should not be treated as a limitation.

The plurality of nodes 101A-G may implement a communication protocol (for example, TCP/IP and the like) to communicate with the other nodes in the blockchain network via at least one of a wired interface or a wireless interface. The plurality of nodes 101A-G may be at least one of a computer system, a server, and the like. The plurality of nodes 101A-G may include a computing system (not shown in the Figure) for archiving the blockchain. Further, the plurality of nodes 101A-G may store a copy of a blockchain network to participate in the blockchain network. Initially, the blockchain network may be stored in a memory associated with the computing system herein referred to as a "local copy" of the blockchain network. The blockchain network includes a one or more blocks, where each block among the one or more blocks includes one or more transactions. The phrase "transactions" herein refers to an event associated with the blockchain network. For example, considering a Financial institution, the transaction may refer to a payment transaction done between a Customer - 1 and a Customer - 2 associated with the Financial institution. In another example, considering a supply chain management, the transaction may refer to a record of the origins of materials purchased by a merchant including one of "Organic," "Local," and "Fair Trade" and the like. The plurality of nodes 101A-G storing the blockchain network in a memory associated with the computing system creates the archival block upon encountering at least one of a predetermined time period and a predefined count of the one or more blocks. For example, the creation of the archival block may be triggered after the predetermined time period of 24 hours. In another example, the generation of the archival block may be triggered after the predefined count of 100 blocks. Further, the one or more transactions to be stored in the one or more blocks is determined based on a memory size allocated to the one or more blocks. For example, a size of 1 megabyte may be allocated to create a block from the one or more transactions.

In an embodiment, after encountering the predetermined time period or the predefined count denoted as predefined criteria, the computing system associated with each of the plurality of nodes 101A-G creates the archival block. The archival block comprises at least one of state information, hash information, and data associated with one or more queries, of one or more blocks of a blockchain network. The state information indicates current values associated with one or more attributes of the blockchain network. For example, considering the financial institution the one or more attributes may be an "Account Number" of one or more customers associated with the financial institutions and a "Balance" amount indicative of a currency associated with each of the "Account number". The state information may be stored as a key-value pair using one or more data structures, for example, a state trie and the like. Further, the hash information may include aggregated cryptographic hash of the one or more blocks of the blockchain network used to create the archival block. For example, considering 5 blocks for the generation of the archival block, the hash information may be as shown:
Hash information: [C576, 5AH1, 8RTC, Z03H, U73L].

Where "C576" is the cryptographic hash associated with a first block of the one or more blocks and the like. Furthermore, the data associated with one or more queries may include one or more queries and a response to each of the one or more queries. For example, considering the financial institution, the one or more queries may be "How many payment transactions of a value greater than 1000$ have been performed?" and the response may be "15 payment transactions". The one or more queries includes frequently inquired queries from users. The data associated with one or more queries is used by the computing system to provide a response to a first query from a user 103. The user 103 may provide the first query to at least one node among the plurality of nodes 101A-G in the blockchain network and request the response to the first query.

Further, the computing system associated with the plurality of nodes 101A-G after the creation of the archival block, moves the one or more blocks associated with the blockchain network. The computing system stores the created archival block in the memory as the local copy. The one or more blocks used in the creation of the archival block is archived by storing the one or more blocks in a pre-allocated storage area 102A-G associated with the plurality of the nodes 101A-G. For example, the pre-allocated storage area 102A-G can be a database, compact disk, hard drive and the like. The storing of the one or more blocks may include chaining the one or more blocks to a previously stored block of the blockchain network in the pre-allocated storage area 102A-G using the cryptographic hash.

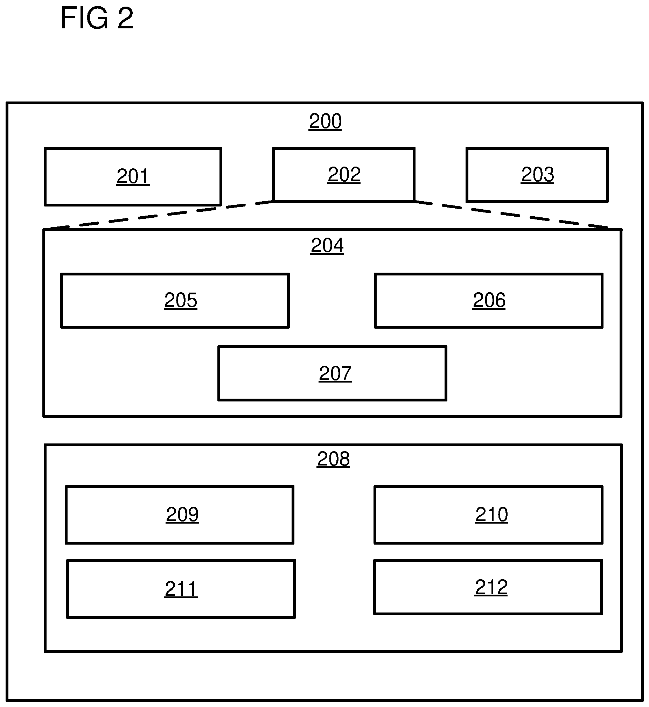

**FIG 2** shows a block diagram of a computing system, according to an embodiment of the present invention. The computing system 200 may include a Central Processing Unit ("CPU" or "processor") 203 and the memory 202 storing instructions executable by the processor 203. The processor 203 may include at least one data processor for executing program components for accomplishing user or system-generated requests. The memory 202 may be communicatively coupled to the processor 203. The computing system 200 further includes an Input/ Output (I/O) interface 201. The I/O interface 201 may be coupled with the processor 203 through which an input signal or/and an output signal may be communicated. In one embodiment, one or more parameters (for example, the predetermined time period, the predefined count, one or more queries, one or more transactions and the like) may be received through the I/O interface 201.

In one implementation, the computing system 200 may include data 204 and modules 208. As an example, the data 204 and modules 208 may be stored in the memory 202 configured in the computing system 103. In one embodiment, the data 204 may include, for example, a blockchain data 205, an archival block data 206, and other data 207. In the illustrated **FIG 2**, data 204 are described herein in detail.

In an embodiment, the blockchain data 205 may store the one or more blocks of the blockchain network before archiving the one or more blocks to the pre-allocated storage area 102A-G. The one or more blocks includes one or more transactions associated with the blockchain network.

In an embodiment, the archival block data 206 includes the state information, the hash information, and the data associated with one or more queries of the archival block and the cryptographic hash associated with a previous block. Further, the archival block data 206 includes a archival blockchain, where the archival block created periodically after the predetermined time period or the predefined count is added to the archival blockchain.

In an embodiment, the other data 207 includes the predetermined time period, the predefined count, the first query from the user 103 and the like.

In some embodiments, the data 204 may be stored in the memory 202 in the form of various data structures. Additionally, the data 204 may be organized using data models, such as relational or hierarchical data models. The other data 207 may store data, including temporary data and temporary files, generated by the modules 208 for performing the various functions of the computing system 200.

In some embodiments, the data 204 stored in the memory 202 may be processed by the modules 208 communicatively coupled to the processor 203 of the computing system 200. The modules 208 may be stored within the memory 202. In one embodiment, the modules 208 may be present outside the memory 202 as shown in **FIG 2** and implemented as hardware. As used herein, the term modules 208 may refer to an Application Specific Integrated Circuit (ASIC), an Field Programmable Gate Array (FPGA), an electronic circuit, a processor (shared, dedicated, or group) that execute one or more software or firmware programs, a combinational logic circuit, and/or other suitable components that provide the described functionality.

In one implementation, the modules 208 may include, for example, an archival block generation module 209, a user query module 210, an archive module 211, and other module 212. It may be appreciated that such aforementioned modules 209 may be represented as a single module or a combination of different modules. The modules 209 are described herein in detail.

In an embodiment, the archival block generation module 209 is used to obtain the state information from the one or more blocks of the blockchain network. Further, obtain the hash information comprising the cryptographic hash of the one or more blocks of the blockchain network. Furthermore, obtain the data associated with one or more queries of the one or more blocks of the blockchain network. The archival block generation module 209 is used to generate a cryptographic hash for the previous block created previously to the archival block. Further, add the archival block to the previous block in the archival blockchain.

In an embodiment, the user query module 210 is used to receive the first query from the user 103. Further, provide the response to the user 103 for the first query using the data associated with one or more queries of the archival block. Further, if the response is absent in the data associated with one or more queries, the user query module 210 may retrieve the one or more blocks from the pre-allocated storage area 102A-G and determine the response to the first query based on the one or more transactions in the one or more blocks. The determined response is provided to the user 103.

In an embodiment, the archive module 211 is used to store the one or more blocks of the blockchain network in the pre-allocated storage area 102A-G. The one or more blocks is stored in the pre-allocated storage area 102A-G based on the cryptographic hash generated using the one or more blocks. The person skilled in the art appreciates the one or more methods of generating the cryptographic hash including but not limited to SHA-256 and Keccak-256.

In an embodiment, the other module 212 is used to verify the cryptographic hash, generate the cryptographic hash and the like.

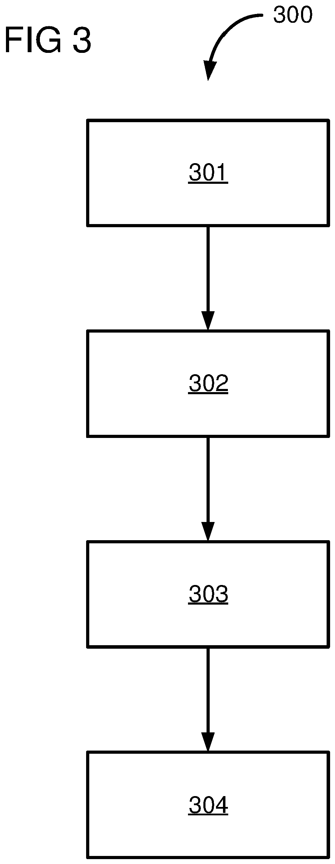

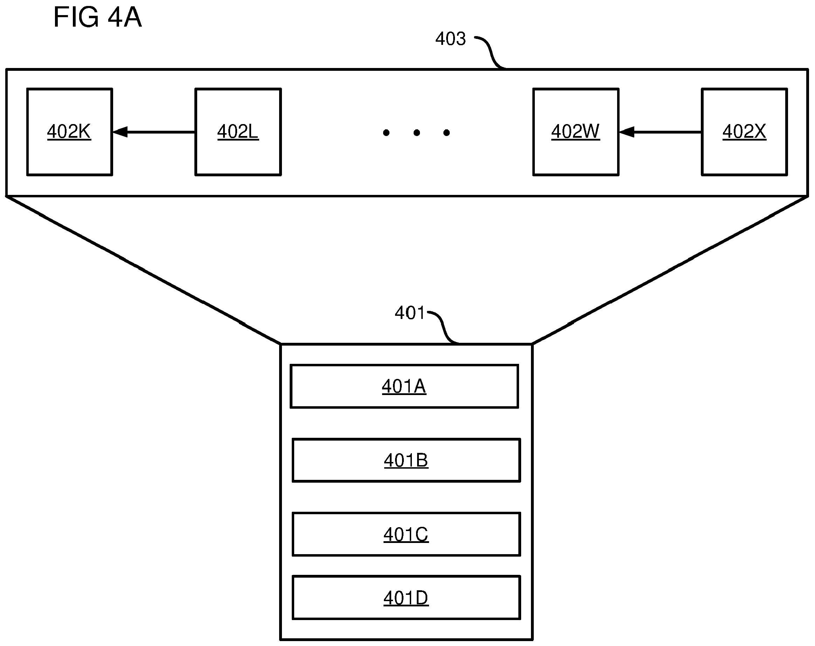

**FIG 3** illustrates a process flowchart of an exemplary method 300 of archiving a blockchain, according to an embodiment of the present invention. At the block 301, the computing system associated with the plurality of nodes 101A-G identifies the one or more blocks in the blockchain network based on a pre-defined criteria. Referring to FIG 4A, the pre-defined criteria includes at least one of the predetermined time period and the predefined count of the one or more blocks 402K,...,402X collectively referred to as 402. For example, the predetermined time period may be 24 hours, 2 days, 15 days and the like, and the predefined count may be 50 blocks, 100 blocks, 150 blocks and the like.

In an embodiment, the computing systems identifies or selects the one or more blocks 402 in the blockchain network 403 after the predetermined time period has elapsed. In another embodiment, the computing system identifies or selects the one or more blocks 402 of the blockchain network 403 after the predefined count of the one or more blocks 402 is received by the comptuing system 200.

At the block 302, the computing system obtains a hash information 401B and a state information 401A, associated with the one or more blocks 402 in the blockchain network 403.

In an embodiment, the state information 401A comprises one or more account details associated with a finanicial institution and an amount indicative of a currency associated with each of the one or more account details from the one or more blocks 402 of the blockchain network 403. The state information 401A is stored as a mapping table in the archival block 401. The mapping table includes a key-value pair, where the key indicates the one or more account details, and the value indicates the amount associated with each of the one or more account details. The mapping table may be stored using the data structure trie or a radix tree and the variants of the trie (for example, Modified Merkle Patricia Trie and the like) . For example, considering a financial institution, the mapping table including the key-value pairs stored in the state information 401A is as shown in table - 1:

**Table - 1**

| **Account (Key)** | **Amount (Value)** |
|---|---|
| 1 | 2340$ |
| 2 | 12358$ |
| . . . | . . . |
| N | 345$ |

In an embodiment, the hash information 401B comprises aggregated cryptographic hash associated with the one or more blocks 402 of the blockchain network 403. For each block in the one or more blocks 402, the computing system determines the cryptographic hash 401D based on the one or more transactions stored in each block. The person skilled in the art appreciates the use of one or more cryptographic techniques for example but not limited to SHA256 and Keccak - 256 to determine the cryptographic hash 401D. The one or more cryptographic techniques for determining the cryptographic hash maps data of any arbitrary size to a cryptographic hash of fixed size. For example, SHA256 maps data of any arbitrary size to a 32 - byte cryptographic hash. The cryptographic hash of 5 blocks stored in the hash information 401B is as shown:
Hash information 401B : [C576, 5AH1, 8RTC, Z03H, U73L].

At the step 303, the computing system associated with the plurality of nodes 101A-G creates the archival block 401 as shown in **FIG 4A** comprising at least one of the state information 401A, the hash information 401B, associated with a one or more blocks 402 of a blockchain network 403.

In an embodiment, creating the archival block 401 is triggered based on at least one of the predetermined time period and the predefined count of the one or more blocks 402. For example, the predetermined time period may be 5 hours, 10 hours, 24 hours, 2 days and the like. In another example, the predefined count of the one or more blocks 402 may be 100 blocks, 200 blocks, 500 blocks and the like. The computing system may implement a timer or a counter for generating the trigger upon completion of the predetermined time period or the predefined count respectively. Further, the computing system is triggered periodically after the completion of the predetermined time period or the predefined count.

In an embodiment, the computing system may compute data associated with one or more queries 401C. The data associated with one or more queries 401C comprises one or more queries frequently inquired by users. The computing system may obtain a list of queries received by the plurality of nodes 101A-G in the blockchain network 403 and determine the one or more queries frequently inquired by users using a sorting and a ranking technique. Further, the response to each of the one or more queries is stored in the data associated with one or more queries 401C. The response to each of the one or more queries is determined based on one or more transactions stored in the one or more blocks 402. Furthermore, the data associated with one or more queries 401C may be stored as a table or a key-value pair using the one or more data structures. For example, the data associated with one or more queries 401C may be as shown in table - 2:

**Table - 2**

| **Queries** | **Response** |
|---|---|
| 1. How many commodities have been created by Trader A? | 15 |
| 2. How many commodities of type EURONEXT have been created by Trader B in the last week? | 35 |
| . . . | . . . |
| 3. Show the history of changes to a Commodity - A done by the Trader - A, in the last 5 days. | Purchased 10, Sold 6, Purchased 8. |

In an embodiment, the computing system determines the response by retrieving one or more values from the one or more transactions stored in the one or more blocks 402 for each of the one or more queries. For example, consider a query "How many units of the Commodity - A has been sold in the month of March by the Trader - A". The computing unit traverses one or more transactions in the one or more blocks 402 corresponding to the month of "March" and retrieves one or more values from the one or more transactions corresponding to the "Selling of Commodity - A". The one or more values may be as shown:
One or more values: [10, 15, 5, 0, 8, 35].

Further, the computing unit may combine the one or more values using one or more statistical techniques for determining the response. The one or more statistical techniques may include but not limited to addition, subtraction, multiplication, division, mean, variance, comparison, and a combination thereof. For example, the one or more values received is added to determine the response as "73 units" corresponding to the query "How many units of the Commodity - A has been sold in the month of March by the Trader - A".

In an embodiment, the archival block 401 additionally includes a header which contains hash information 401B of a previous block, the state information 401A of the one or more blocks 402 in a blockchain network 403, and the data associated with one or more queries 401C. The computing system computes the cryptographic hash 401D (i.e. hash information 401B) of the previous block created previously to the archival block 401, based on at least one of the state information 401A, the hash information 401B, and the data associated with one or more queries 401C of the previous block. Further, the computing system concatenates the cryptographic hash 401D with the state information 401A, the hash information 401B, and the data associated with one or more queries 401C of the archival block 401 as shown in **FIG 4A****.**

At step 304, the computing system moves the identified one or more blocks 402 associated with the blockchain network 403 to a pre-allocated storage area 102A-G.

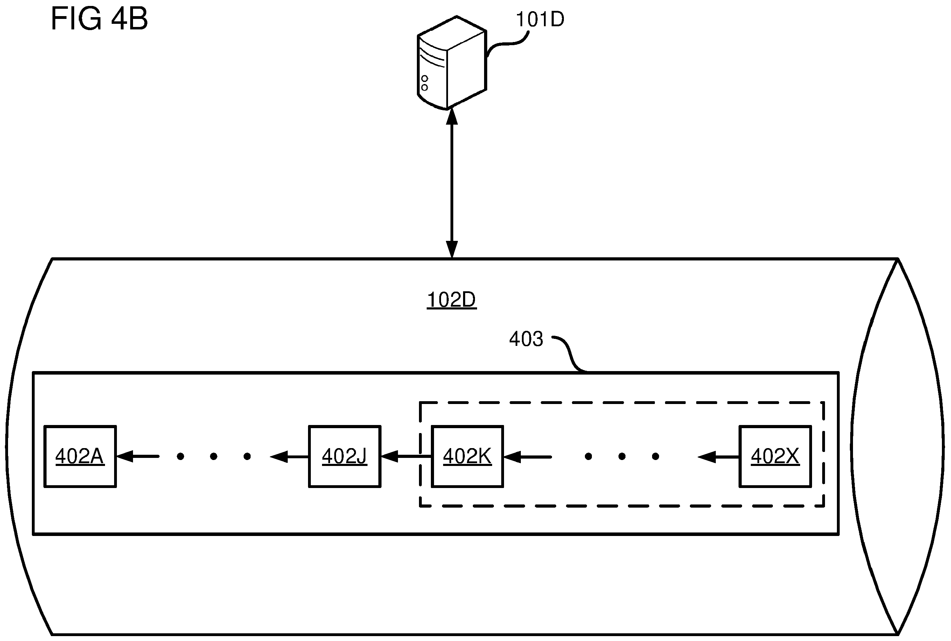

In an embodiment, until the creation of the archival block 401, the computing system may store the one or more blocks 402 in the memory 202. The computing system may identify the one or more blocks 402 used in the generation of the archival block 401 for archiving. After the creation of the archival block 401, the computing system archives the one or more blocks 402 by storing the one or more blocks 402 in a pre-allocated storage area 102A-G as shown in **FIG 4B****.** The computing system may add the one or more blocks 402 (denoted by the dotted lines) to an existing blockchain network 403 in the pre-allocated storage area 102A-G as shown in **FIG 4B****.** The exisiting blockchin network 403 includes a plurality of blocks 402A,...,402J previously stored in the pre-allocated storage area 102A-G as shown in **FIG 4B****.**

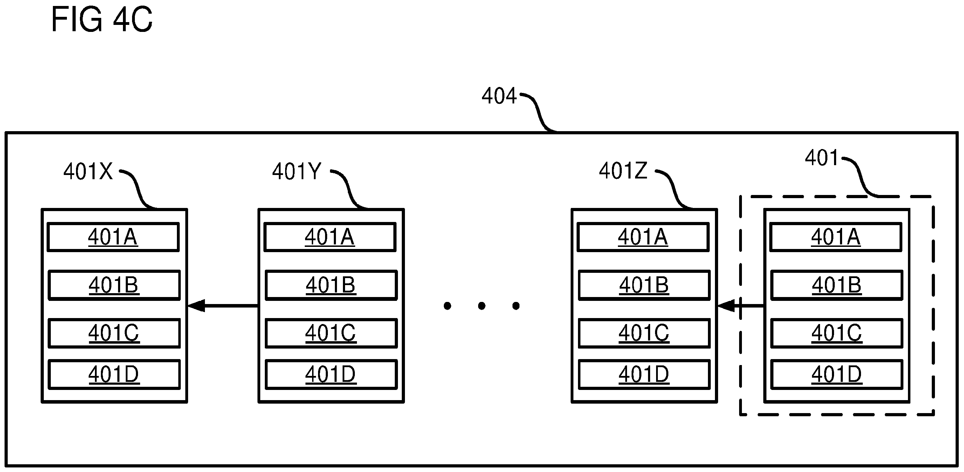

In an embodiment, the computing system creates the archival block 401 periodically upon encountering at least one of a predetermined time period and a predefined count of the one or more blocks 402. The periodically created archival block 401 (denoted by the dotted lines) is added to the archival blockchain 404 as shown in **FIG 4C****.** The archival blockchain 404 includes the previously generated archival blocks 401X, ..., 401Z. The archival blockchain 404 is stored in the memory of the computing system 200.

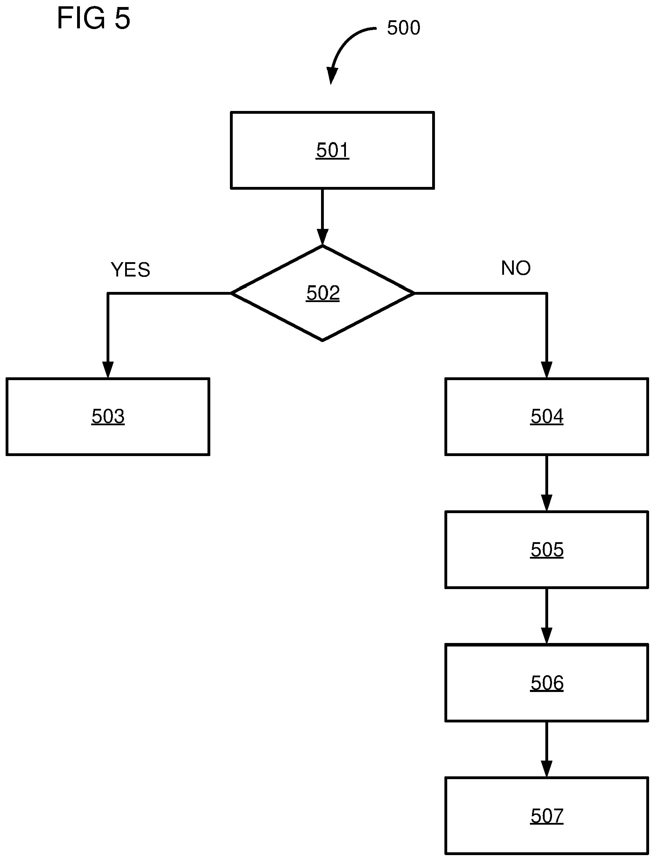

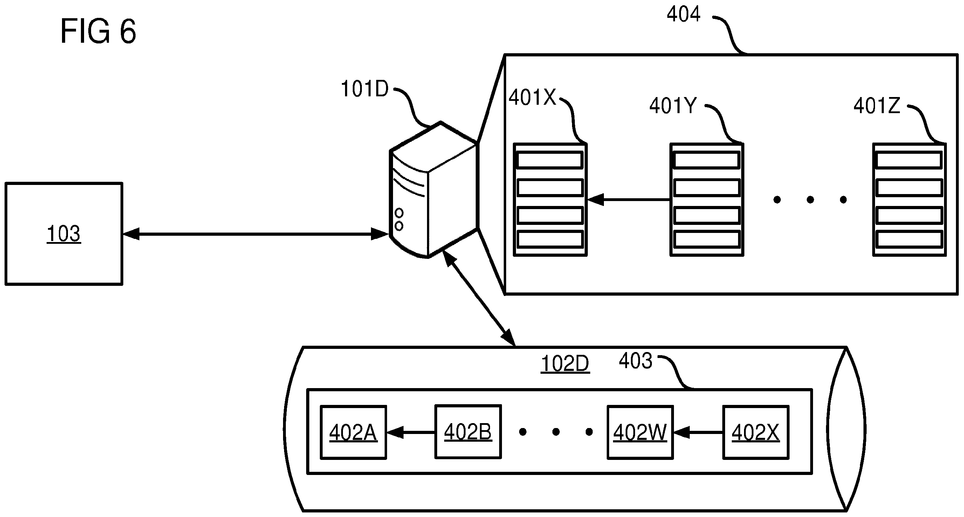

**FIG 5** illustrates a process flowchart of an exemplary method 500 for providing a response to a query, according to an embodiment of the present invention. At block 501, the computing system of at least one node from the plurality of nodes 101A-G in the blockchain network 403 receives the first query from the user 103 as shown in **FIG 6****.** The first query is related to the one or more transactions associated with the blockchain network 403.

At block 502, the computing system identifies at least one of a presence or absence of a first response to the first query in the archival block 401. The computing system may search for the presence or the absence of the first query in the one or more queries stored in the data associated with one or more queries 401C in the archival block 401 of the archival blockchain 404. If the first query is present in the data associated with one or more queries 401C, then the presence of the first response is identified. If the first query is absent in the data associated with one or more queries 401C, then the absence of the first response is identified.

At block 503, in response to identifying the presence of the first response in the data associated with one or more queries 401C of the archival blockchain 404, the computing system provides the first response to the user 103 as shown in **FIG 6****.** The computing system retrieves the first response corresponding to the first query from the data associated with one or more queries 401C and provides the first response to the user 103.

At block 504, in response to identifying the absence of the first response 406, the computing system retrieves the one or more blocks 402 of the blockchain network 403 from the pre-allocated storage area 102A-G as shown in **FIG 6****.**

At block 505, the computing system verifies the cryptographic hash 401D associated with the one or more blocks 402. The computing system generates the cryptographic hash 401D for the one or more blocks 402 retrieved from the pre-allocated storage area 102A-G. Further, the cryptographic hash 401D generated is compared with the corresponding cryptographic hash stored in the hash information 401B of the archival block 401 in the archival blockchain 404. If the generated cryptographic hash 401D matches with the corresponding cryptographic hash stored in the hash information 401B, then the blockchain network 403 is not modified or attacked by the malicious nodes. If the generated cryptographic hash 401D does not match with the corresponding cryptographic hash stored in the hash information 401B, then the blockchain network 403 is said to be modified or attacked by the malicious nodes.

At block 506, if the blockchain network 403 is not modified or attacked by the malicious nodes, the computing system determines the first response based on one or more transactions stored in the one or more blocks 402 of the blockchain network 403 retrieved from the pre-allocated storage area 102A-G. The first response is determined by traversing one or more transactions in the one or more blocks 402. Further, retrieving one or more values from the one or more transactions stored in the one or more blocks 402 for the first query 405. Furthermore, combining one or more values using one or more statistical techniques for determining the first response 406.

At block 507, the computing system provides the first response to the user 103 as shown in **FIG 6****.**

The method of archiving the blockchain enables the plurality of nodes 101A-G to participate in the blockchain network 403 without the need for high computation resources and high memory. The creation of the archival block 401 eliminates the need to store the blockchain network 403 in the memory as a "local copy". The archival block 401 requires minimal memory for storage requirements as compared to the blockchain network 403. Storing the blockchain network 403 in the pre-allocated storage area 102A-G eliminates the need for high memory in the plurality of nodes 101A-G. Storing the data associated with one or more queries 401C in the archival block 401 eliminates the need for high computational resources for determining a response to the first query from the user 103.

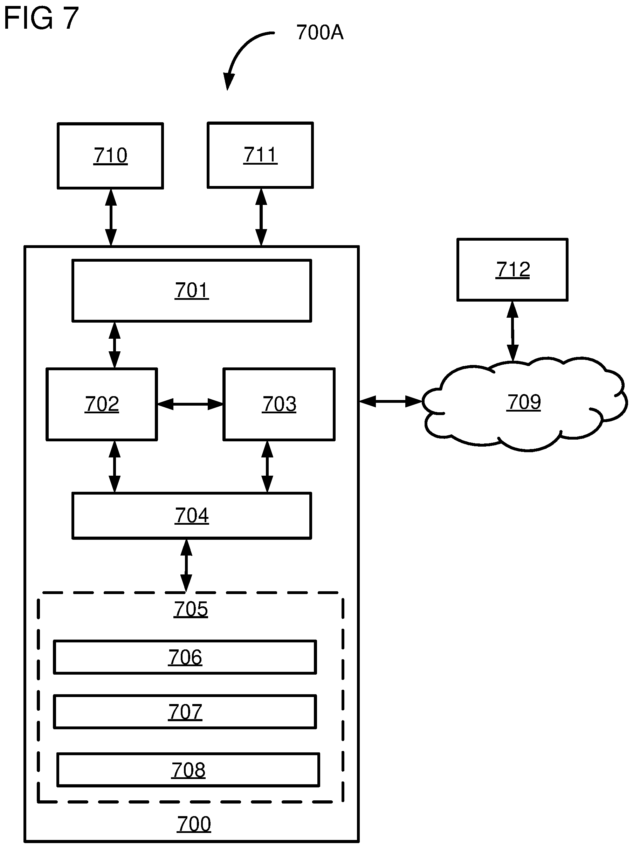

The present invention can take the form of a computer program product, where **FIG 7** illustrates a block diagram of an exemplary computer system 700 for implementing embodiments consistent with the present invention. In an embodiment, the computer system 700 may be used to implement the method of archiving the blockchain. The computer system 700 may comprise a central processing unit ("CPU" or "processor") 702. The processor 702 may comprise at least one data processor for executing program components for dynamic resource allocation at run time. The processor 702 may include specialized processing units such as integrated system (bus) controllers, memory management control units, floating-point units, graphics processing units, digital signal processing units, etc.

The processor 702 may be disposed in communication with one or more input/output (I/O) devices (not shown) via I/O interface 701. The I/O interface 701 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code division multiple access (CDMA), high-speed packet access (HSPA+), global system for mobile communications (GSM), long-term evolution (LTE), WiMax, or the like), etc.

Using the I/O interface 701, the computer system 700 may communicate with one or more I/O devices. For example, the input device 710 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 711 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 700 is connected to the service operator through a communication network 709. The processor 702 may be disposed in communication with the communication network 709 via a network interface 703. The network interface 703 may communicate with the communication network 709. The network interface 703 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network 709 may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface 703 and the communication network 709, the computer system 700 may communicate with the one or more service operators.

In some embodiments, the processor 702 may be disposed in communication with memory 705 (e.g., RAM, ROM, etc. not shown in Figure 7 via a storage interface 704. The storage interface 704 may connect to memory 705 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 705 may store a collection of program or database components, including, without limitation, user interface 706, an operating system 707, web server 708, etc. In some embodiments, the computer system 700 may store user/application data 706, such as the data, variables, records, etc. as described in this disclosure.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

In some implementation, the one or more queries, the first query 405, the one or more transactions may be received from the remote devices 712. In an embodiment, the remote devices 712 may be a user device associated with the user 103.

### List of reference numbers

- 100: Exemplary environment comprising blockchain network
- 101A-G: Nodes
- 102A-G: Pre-allocated storage area
- 103: User
- 200: Computing system
- 201: Input/Output interface
- 202: Memory
- 203: Processing unit
- 204: Data
- 205: Blockchain data
- 206: Archival block data
- 207: Other data
- 208: Modules
- 209: Archival block generation module
- 210: User query module
- 211: Archive module
- 212: Other module
- 300: Method of archiving blockchain
- 401: Archival block
- 401A: State information
- 401B: Hash information
- 401C: Queries
- 401D: Cryptographic hash
- 401X-Z: Archival blocks
- 402A-X: Blocks
- 403: Blockchain network
- 404: Archival blockchain
- 500: Method of providing response to a query
- 700: Computer system
- 701: Input/output interface
- 702: Processing unit
- 703: Network interface
- 704: Storage interface
- 705: Memory
- 706: User interface
- 707: Operating system
- 708: Web server
- 709: Communication network
- 710: Input device
- 711: Output device
- 712: Remote devices

## Claims

1. A method of archiving one or more blocks (402) in a blockchain network (403), the method comprises:
identifying, by a computing system (200), one or more blocks (402) in a blockchain network (403) based on a pre-defined criteria;
obtaining, by the computing system (200), a hash information (401B) and a state information (401A), associated with the one or more blocks (402) in the blockchain network (403) ;
creating, by the computing system (200), an archival block (401) in the blockchain network (403) comprising the hash information (401B) and the state information (401A) associated with the one or more blocks (402); and
moving, by the computing system (200), the identified one or more blocks (402) to a pre-allocated storage area (102A-G).

2. The method according to claim 1, further comprising computing data associated with one or more queries (401C).

3. The method according to claim 1, wherein the archival block (401) further comprises a header which contains hash information (401B) of a previous block, the state information (401A) of the one or more blocks (402) in a blockchain network (403), and the data associated with one or more queries (401C) .

4. The method as claimed in claim 3, wherein the data associated with one or more queries (401C) comprises:
one or more queries frequently inquired by users; and
a response to each of the one or more queries, wherein the response is determined based on one or more transactions stored in the one or more blocks (402).

5. The method as claimed in claim 4, wherein determining the response comprises:
retrieving one or more values from the one or more transactions stored in the one or more blocks (402) for each of the one or more queries; and
combining the one or more values using one or more statistical techniques for determining the response.

6. The method as claimed in claim 1, wherein creating the archival block (401) is based on at least one of a predetermined time period and a predefined count of the one or more blocks (402).

7. The method as claimed in claim 1, wherein moving the identified one or more blocks (402) comprises storing the one or more blocks (402) in the pre-allocated storage area (102A-G) .

8. The method as claimed in claim 1, archival block(401) further comprises:
computing a cryptographic hash (401D) based on at least one of state information (401A), the hash information (401B), and data associated with one or more queries (401C) of a previous block created previously to the archival block (401); and
concatenating the cryptographic hash (401D) with the state information (401A), the hash information (401B), and the data associated with one or more queries (401C) of the archival block (401).

9. A computing system (200) for archiving a blockchain, the computing system (200) comprising:
at least one processor (203); and
a memory (202) communicatively coupled to the processor (203), wherein the memory (202) stores machine readable instructions, which, on execution, causes the processor (203) to perform any of the method steps as claimed in claims 1 to 8.

10. A method of providing a response to a query, the method comprises:
receiving a first query from a user (103);
identifying at least one of a presence or absence of a first response to the first query in the archival block (401) as claimed in claim 1;
in response to identifying the presence of the first response (406), providing the first response to the user (103);
in response to identifying the absence of the first response (406),
retrieving the one or more blocks (402) from a pre-allocated storage area (102A-G);
verifying a cryptographic hash (401D) associated with the one or more blocks (402);
determining the first response based on one or more transactions stored in the one or more blocks (402); and
providing the first response to the user (103).

11. A non-transitory computer readable medium including instructions stored thereon that when processed by at least one processor cause a device to perform operations as claimed in claims 1-10.
